# EUROPÄISCHE PATENTANMELDUNG

(11) **EP 2 457 705 A1**
(43) Veröffentlichungstag der Anmeldung: **30.05.2012**
(21) Anmeldenummer: 11190857.0
(22) Anmeldetag: 26.11.2011
(51) Int. Cl.: B27L 7/06, B27M 1/02, C10L 5/44

(54) **Matrize zur Herstellung von Pellets**

(30) Priorität: 29.11.2010 DE 102010052642
(71) Anmelder: Gerhard Stahlhandel GmbH, 63639 Flörsbachtal (DE)
(72) Erfinder: Gerhard, Reinhold, 63639 Flörsbachtal (DE)
(74) Vertreter: Blecha, Andreas

(57) **Zusammenfassung**

Die Erfindung betrifft elne Matrize (10) zur Bildung von Pellets (61) aus VoIlholz, insbesondere aus Vollholzabschnitten (80b), mit wenigstens einer Schneidenanordnung (20) und einem der Schneidenanordnung (20) nachgeordneten Verdichtungsbereich (30), wobei ein Aufspalten und ein Verdichten des Vollholzes in einem Arbeitsgang durchführbar ist, wobei die Schneidenanordnung (20) lösbar in der Matrize (10) angeordnet und der Verdichtungsbereich (30) in die Matrize (10) eingeformt ist, elne Vorrichtung mit elner derartigen Matrize, ein Verfahren zur Herstellung Pellets mit einer derartigen Matrize sowie stäbchenförmige Pellets.

## Beschreibung

Die Erfindung betrifft eine Matrize zur Bildung von Pellets aus Vollholz insbesondere aus Vollholzabschnitten, eine Vorrichtung mit einer derartigen Matrize, ein Verfahren zur Herstellung der Pellets sowie stäbchenförmige Pellets.

Herkömmliche Brennstoff- oder Holzpellets werden im Press- oder Extrusionsverfahren aus brennbaren Abfällen insbesondere der Sägeindustrie gebildet. Der Vorteil derartiger Holzprodukte liegt in dem guten Heizwert, der Möglichkeit uniforme Brennmaterialien bereitzustellen, die sich für die Verwendung in Heiz- oder Brennöfen eignen sowie der verglichen mit fossilen Energieträgern neutralen CO₂ Bilanz der Produkte.

Aufgrund des steigenden Bedarfes kann die Nachfrage aus den obengenannten Quellen nicht mehr vollständig gedeckt werden. Es wird daher verstärkt dazu übergegangen, minderwertige Holzqualitäten in einem Mahl- oder Zerspanungsprozess zu Ausgangsmaterial für Pellets zu verarbeiten. Hierbei wird das Vollholz zunächst in Späne umgeformt, um hernach wiederum zu Holzpellets oder Holzbriketts geformt, verpresst oder extrudiert zu werden.

Nachteilig an bekannten Holzpellets aus Spanmaterial ist, dass der Energieaufwand für die Zerspanung und anschließende Verpressung des Vollholzes hoch ist und sich damit die Energiebilanz der fertigen Pellets insgesamt verschlechtert.

Es wird daher vorgeschlagen, aus Vollholzabschnitten pelletartige Gebilde auszustanzen und diese nachträglich zu verdichten. Nachteilig an diesem Verfahren erweist sich jedoch die geringe Ausbeute, da ein Stanzrest verbleibt, der nicht für die Bildung von Pellets zur Verfügung steht. Zudem ist das Bildungsverfahren umständlichen und energieaufwändig, da in einem ersten Arbeitsschritt das Ausstanzen und in dem Stanzwerkzeug dann das Verdichten des Holzes erfolgt.

Die RU 2007 139 860 schlägt ein einstückiges Werkzeug zum Erzeugen von Pellets vor, bei dem Vollholz durch eine Matrix gepresst wird und dabei Pellets entstehen. Nachteilig ist, dass bei Verschleiß der Abschnitte für das Auftrennen das gesamte Werkzeug ausgetauscht werden muss.

Aufgabe der vorliegenden Erfindung ist es daher, die Nachteile des Standes der Technik zu überwinden. Es soll ein wartungsfreundliches Werkzeug zur Verfügung gestellt werden, um Pellets aus Vollholz in einfacher sowie energie- und kosteneffizienter Art und Weise zu bilden. Zudem soll eine vollständige Verwertung des Ausgangsmaterials erfolgen.

Diese Aufgabe wird gelöst durch eine wie eingangs beschriebene Matrize, eine mit der Matrize ausgestattete Vorrichtung sowie ein Verfahren zur Bildung von Pellets aus Vollholz.

Erfindungsgemäß ist eine Matrize zur Bildung von Pellets aus Vollholz und dabei insbesondere aus Vollholzabschnitten, beispielsweise Stammabschnitten, Holzrollen oder bereits bearbeitetem (Alt-)Holz oder dergleichen vorgesehen. Diese Matrize ist durch wenigstens eine Schneidenanordnung und einen Verdichtungsbereich gekennzeichnet. Die Schneidenanordnung dient dabei zum Aufspalten des Vollholzes oder des Vollholzabschnittes, um Rohpellets zu bilden. Diese werden in dem der Schneidenanordnung nachgeordneten Verdichtungsbereich verdichtet. Eine Bildung der Pellets aus Vollholz oder Vollholzabschnitten kann so in einem Arbeitsgang durchgeführt werden. In dem Verdichtungsbereich wird die Holzdichte dabei insgesamt erhöht und die verdichteten Pellets weisen verglichen mit unbearbeitetem Holz bei gleichem Volumen einen wesentlich verbesserten Heizwert (kWh/kg) auf. Vorteil der erfindungsgemäßen Matrize ist es, dass in einfacher und schneller Art und Weise aus Vollholz oder Vollholzabschnitten gleichmäßig ausgeformte Pellets gebildet werden können, die hinsichtlich des Heizwertes sowie der Energiebilanz herkömmlichen, aus Spänen oder aus Holzabfallmaterialien gebildeten Holzpellets vergleichbare Werte aufweisen und die Heizwerte von nichtverdichtetem Holz sogar übertreffen.

Bevorzugt erfolgt das Aufspalten in Längsrichtung der Fasern, da hier eine leichte Spaltbarkeit der meisten Holzarten gegeben ist und so die Matrize verschleißarm verwendet werden kann. Die Verdichtung erfolgt parallel zur Längsrichtung der Holzfasern.

Die Matrize ist vorteilhafterweise derart ausgebildet, dass sich die Schneidenanordnung und der Verdichtungsbereich in einem, insbesondere gemeinsamen Rahmen befinden. Der Rahmen verleiht der gesamten Matrize eine für das nachfolgend beschriebene Bildungsverfahren für die Pellets ausreichende Stabilität und vermag dem während des Aufspaltens sowie Verdichtens des Vollholzes aufgebrachten Druck standzuhalten. Daneben wird durch den Rahmen die Anordnung der Matrize in einer Vorrichtung vereinfacht.

Um eine Verdichtung des aufgespalteten Vollholzes durchführen zu können, und um diese Verdichtung möglichst effizient und energiesparend zu erzielen, wird es als vorteilhaft angesehen, wenn der Verdichtungsbereich konisch zulaufend ausgebildet ist. Neben oder zusätzlich zu dem konischen Zulaufen kann der Verdichtungsbereich selbstverständlich auch derart ausgebildet sein, dass eine Formgebung der Pellets erfolgt. Der Verdichtungsbereich ist hierzu mit einem runden, vier- oder mehreckigen Querschnitt ausgebildet. Die Formgebung der Pellets erweist sich insbesondere als vorteilhaft bei der Lagerung, dem Transport sowie beim Abbrandvorgang.

Erfindungsgemäß ist vorgesehen, dass die Schneidenanordnung lösbar in der Matrize und/oder dem Rahmen angeordnet ist. Bevorzugt ist dabei zumindest der Verdichtungsbereich in die Matrize und/oder den Rahmen eingeformt vorgesehen, in den die eingesetzte Schneidenanordnung nahtlos übergeht. Die Matrize bzw. der Rahmen sind wesentlich massiver als die Schneidenanordnung ausgebildet und in der Lage die eingebrachten Drücke optimal aufzunehmen.

Der Verdichtungsbereich ist fest, bevorzugt einstückig mit der Matrize und/oder dem Rahmen gebildet, während die Schneidenanordnung austauschbar in der Matrize beziehungsweise dem Rahmen angeordnet vorgesehen ist. Dies ermöglicht es, bei Verschleiß der Schneiden bzw. der Schneidenanordnung diese teilweise oder vollständig aus der Matrize beziehungsweise dem Rahmen zu entnehmen, aufzuarbeiten oder gegen neue Schneiden bzw. eine neue Schneidenanordnung auszutauschen.

Als vorteilhaft wird angesehen, wenn die Schneidenanordnung wenigstens zwei Schneiden oder Schneidplatten aufweist und die Schneiden oder Schneidplatten rasterartig in der Matrize angeordnet sind. Die Schneiden beziehungsweise Schneidplatten können dabei kreuzweise in der Schneidenanordnung eingesetzt, eingelegt oder eingeklemmt werden, wobei dann durch die jeweilige Anordnung der Schneiden oder Schneidplatten das Aufspalten des Vollholzes beziehungsweise die daraus resultierende Form der Pellets vor der Verdichtung festgelegt wird. Über eine geeignete Anordnung kann die Ausnutzung des zur Verfügung stehenden Vollholzes beziehungsweise der Vollholzabschnitte optimiert werden.

Als günstig erweist es sich dabei, wenn die Schneiden oder Schneidplatten lösbar oder fest in der Matrize und/oder dem Rahmen anordenbar sind. Es kann somit eine einfache und schnelle Entnahme der Schneiden oder Schneidplatten durchgeführt werden, um diese beispielsweise nachzuschärfen oder gegen neue Schneiden oder Schneidplatten auszutauschen.

Eine weitere als günstig angesehene Ausführungsform der Matrize sieht bezüglich der Schneidenanordnung oder der Kombination aus Schneidenanordnung und Verdichtungsbereich vor, dass in dieser wenigstens zwei Hülsen vorgesehen sind. Die Hülsen weisen insbesondere einen runden, vier- oder mehreckigen Querschnitt auf. Die Matrize bzw. die Schneidenanordnung kann individuell aus Hülsen zusammengesetzt werden. Bevorzugt können Hülsen mit viereckigem Querschnitt als Raster im rechten Winkel angeordnet werden. Bei Verwendung von sechs- und mehreckigen Hülsen können diese zu einer im wesentlichen wabenartigen Anordnung zusammengefügt werden. Auch hier besteht die Möglichkeit einer Anpassung der Matrize an das zu zerkleinernde, das heißt aufzuspaltende Vollholz oder den Vollholzabschnitt, da durch Entnahme bzw. Hinzunahme weiterer Hülsen die effektive Schneidfläche beliebig verkleinert bzw. vergrößert werden kann. Wird eine derartige Schneidenanordnung beispielsweise mit einem verstellbaren Rahmen beziehungsweise einer größenvariablen Matrize kombiniert, kann hierdurch auf unterschiedliche Durchmesser der Vollholzabschnitte beziehungsweise des Ausgangsmaterials reagiert werden, um so die Effizienz einer wie nachfolgend beschriebenen Vorrichtung weiter zu steigern.

Durch Variation der Schneiden- bzw. Schneidplattenabstände oder die Auswahl von Hülsen mit variablen Durchmessern kann zudem eine Größenvariation der erzeugten Pellets erfolgen. Es können beispielsweise größere Pellets als Anfeuerholz und kleiner Pellets als Brennmaterial für Öfen oder Pelletheizungen hergestellt werden. Durch geeignete Kombination von Schneiden, Schneidplatten oder Hülsen und darauf abgestimmten Verdichtungsbereichen besteht die Möglichkeit, aus demselben Vollholzabschnitt Pellets unterschiedlicher Größe zu gewinnen.

Bei der wie vor beschriebenen, aus Hülsen aufgebauten Matrize bzw. Schneidenanordnung ist vorgesehen, dass jeweils eine Schneide oder Schneidenfläche am Umfang der Hülsen angeordnet ist. Daneben besteht die Möglichkeit, dass eine Schneide aus den Schneidenflächen benachbarter Hülsen bildbar ist. Dabei ergänzen sich zwei Hülsen beziehungsweise die daran angeordneten Schneidenteilflächen zu einer Schneide und bilden diese. Dies erweist sich als vorteilhaft, da eine wesentlich bessere Ausnutzung der Gesamtfläche des Vollholzabschnittes durchgeführt und das Aufspalten des Holzes aufgrund der weniger starken Schneiden verbessert wird.

Die Hülsen sind vorteilhafter Weise lösbar in der Matrize oder dem Rahmen anordenbar. Daneben besteht selbstverständlich auch die Möglichkeit, dass die Hülsen fest in der Matrize angeordnet sind und hier die Schneidenanordnung bilden. Die wie zuvor beschriebene Ausbildung der Schneidenanordnung aus Hülsen bietet den Vorteil, dass bei Verschleiß nicht die gesamte Schneidenanordnung entnommen beziehungsweise ausgetauscht oder verworfen werden muss, sondern einzelne Hülsen aus dieser gelöst und gegen neue Hülsen oder gegen Hülsen mit aufgearbeiteter oder nachgeschärfter Hülse ausgetauscht werden können.

Die erfindungsgemäße Matrize zeichnet sich in einer als vorteilhaft angesehenen Ausführungsform dadurch aus, dass die Schneidenanordnung, die Schneiden, der Verdichtungsbereich und/oder der Rahmen mit einer haftungsreduzierenden Oberflächenbeschichtung ausgerüstet sind. Diese Oberflächenbeschichtung ist dabei bevorzugt aus einem Hartstoff, günstiger Weise aus Titancarbid oder Titannitrid gebildet. Bei derartigen Beschichtungen reichen bereits wenige µm starke Schichten aus, um wirkungsvolle und vor allem verschleißarme Beschichtung des Werkzeugmaterials durchzuführen. Durch die Beschichtung wird ein Verschleißschutz gebildet und die Belastbarkeit des Materials verbessert. Die Oberflächenbeschichtung, unter Umständen gepaart mit einer Politur der Oberfläche, hat den Vorteil, dass der Aufspalt- und Verdichtungsprozess wesentlich vereinfacht wird, da die Reibung an der Oberfläche des Werkzeuges beziehungsweise der Werkzeugteile herabgesetzt wird. Darüber hinaus verleiht ein entsprechend beschichtetes Werkzeug den damit gebildeten Pellets eine wesentlich glattere Oberfläche, was sich wiederum vorteilhaft bei der Lagerung und Förderung des Schüttgutes auswirkt. Die Fließ- bzw. Rieselfähigkeit der gebildeten Pellets wird wesentlich verbessert, wenn diese eine besonders glatte Oberfläche aufweisen. Neben der vorgenannten Beschichtung werden vergleichbare Effekte dadurch erzielt, dass die Schneidenanordnung, die Schneiden, der Verdichtungsbereich und/oder der Rahmen der erfindungsgemäßen Matrize bevorzugt aus Stahl, Hartmetall, Cermet, Keramik oder dergleichen gebildet ist/sind. Das Material wird hierbei anhand der aufzunehmenden Drücke beziehungsweise der Belastungen und Beanspruchung der Matrize ausgewählt. Es ist hierbei auch vorgesehen Schneidenanordnung, Schneiden, Verdichtungsbereich und/oder Rahmen aus unterschiedlichen Materialien zu bilden. So bietet es sich beispielsweise an, die Schneiden aus Keramik zu bilden, da hierdurch die Dauerhaftigkeit und Verschleißarmut der Vorrichtung wesentlich verbessert werden kann.

Um eine individualisierte Anpassung der Matrize an die jeweilige aufzuspaltenden und zu verdichtenden Ausgangsmaterialien sowie deren Größe durchführen zu können, wird es als günstig angesehen, wenn die Schneidenanordnung, die Schneiden und/oder der Verdichtungsbereich verstellbar ausgebildet ist/sind. Hierbei kann der Abstand der einzelnen Schneiden/Verdichtungsbereiche zueinander sowie der Abstand zwischen Schneidenanordnung und Verdichtungsbereich bevorzugt variabel beabstandbar ausgebildet sein.

Von eigenständiger erfinderischer Bedeutung ist eine Vorrichtung zur Herstellung von Pellets aus Vollholz oder Vollholzabschnitten mit einer wie zuvor beschriebenen Matrize. Als günstig erweist es sich hierbei, wenn die Matrize horizontal oder vertikal in der Vorrichtung angeordnet ist. Hierdurch besteht zusammen mit der ebenfalls in der Vorrichtung vorgesehenen Vorschubvorrichtung die Möglichkeit, diese in verschiedenster Art und Weise auszubilden. In der Vorrichtung können beispielsweise bereits abgelängte Vollholzabschnitte zu Pellets verarbeitet werden. Diese werden auf einer der erfindungsgemäßen Vorrichtung vorgelagerten oder einer gesonderten Vorrichtung aus Holzrollen, Stammabschnitten oder Holzabschnitten gebildet und dann mittels einer Fördervorrichtung an die erfindungsgemäße Vorrichtung weitergegeben. Die Vorrichtung weist dann eine Aufnahme und/oder Führung für die Abschnitte auf, um die insbesondere scheibenartigen Abschnitte über oder vor der Matrize zu positionieren. Eine Vorschubrichtung presst die Abschnitte auf die Matrize auf beziehungsweise durch diese hindurch, wobei die Pellets gebildet werden.

Die erfindungsgemäße Vorrichtung kann in einer weiteren, als günstig angesehenen Ausführungsform auch wenigstens eine parallel zur Matrize angeordnete, bevorzugt rechtwinklig zur Längsrichtung der Holzfasern wirkende Schneidevorrichtung für die Vollholzabschnitte und/oder die Pellets aufweisen. Dies bedeutet, dass in die Vorrichtung Rollen oder Stammabschnitte oder sonstige Vollholzabschnitte eingelegt werden, die Vorrichtung zunächst ein Aufschneiden der Vollholzabschnitte in Scheiben durchführt und diese dann der Matrize zur Bildung der Pellets zugeführt werden. Die vorgenannte Schneidevorrichtung ist dabei bevorzugt als Bandsäge, Kreissäge, Wippsäge und/oder als senkrecht zu einer Bearbeitungs- oder Vorschubrichtung ausgerichtetes, insbesondere hydraulisch oder pneumatisch beaufschlagtes Scher- oder Spaltmesser oder dergleichen ausgebildet und günstiger Weise vor beziehungsweise nach der Matrize angeordnet. Bei einer Anordnung vor der Matrize erfolgt vor dem Durchgang der Vollholzabschnitte durch die Matrize ein Auftrennen des Vollholzes zu Scheiben, die hernach durch die Matrize geleitet und zu Pellets aufgespaltet beziehungsweise verdichtet werden. Ist die Schneidevorrichtung der Matrize nachgelagert, wird der Vollholzabschnitt in die Matrize eingedrückt und die Pellets werden hierbei gebildet. Nach der Matrize befindet sich dann die Schneidevorrichtung, die Abschnitte aus dem aufgetrennten und verdichteten Vollholz abtrennt, wodurch dann die eigentlichen Pellets gebildet werden.

Die Vorrichtung umfasst bevorzugt eine insbesondere hydraulische oder pneumatische Press- oder Vorschubrichtung für die Vollholzabschnitte. Daneben besteht auch die Möglichkeit, dass die Matrize in der Vorrichtung beweglich angeordnet wird und durch eine entsprechende Vorschubvorrichtung in Richtung der Vollholzabschnitte bewegt wird, um dabei die Holzpellets zu bilden.

Die Vorrichtung umfasst in einer als günstig angesehenen Ausführungsform eine Führung für die Vollholzabschnitte für deren Führung auf die Matrize zu. In diese Führung werden die Vollholzabschnitte eingelegt und dann beispielsweise durch die Presse der Vorschubrichtung beaufschlagt, um in die Matrize eingeführt und dort aufgespaltet und verdichtet zu werden.

Die Vorrichtung ist bevorzugt mobil ausgeführt, beispielsweise auf einem Anhänger oder auf einem Transportfahrzeug angeordnet. Der Antrieb der Vorrichtung kann dann über einen gesonderten Antrieb erfolgen. Daneben ist eine Koppelung an den Fahrzeugantrieb oder die -hydraulik möglich. Mindere Holzqualitäten können so an Ort und Stelle, d. h. direkt am Waldort/Ort der Holzwerbung oder im Sägewerk weiterverarbeitet werden. Weitergehende Transporte der minderwertigen Qualitäten entfallen somit. Die Uniformität der Pellets vereinfacht zudem wesentlich deren Transport. Durch die Verdichtung können größere Holzvolumina transportiert werden, wodurch der Transport optimiert und Kosten gesenkt werden.

Gleichermaßen von erfinderischer Bedeutung ist ein Verfahren zur Herstellung von insbesondere stäbchenförmigen Pellets aus Vollholzabschnitten. Hierzu wird eine wie vorbeschrieben ausgeführte Matrize verwendet. Das Verfahren umfasst dabei das Aufspalten der Vollholzabschnitte. In diesem Verfahrensschritt werden Rohpellets aus den Vollholzabschnitten gebildet. Nach dem Aufspalten der Vollholzabschnitte erfolgt ein Verdichten des aufgetrennten Vollholzes. Aufspalten und Verdichten wird dabei erfindungsgemäß in einem Arbeitsgang oder Arbeitstakt durchgeführt. Während in einer bevorzugten Ausführungsform des Verfahrens das Aufspalten in Längsrichtung der Holzfasern erfolgt, ist ein Verdichten parallel zur Längsrichtung der Holzfasern vorgesehen.

Im Verdichtungsschritt erfolgt nicht nur eine Formgebung beziehungsweise Formänderung der Pellets. Es wird auch die Holzdichte insgesamt erhöht, weshalb sich der Heizwert (kWh/kg) der in dem erfindungsgemäßen Verfahren gebildeten Holzpellets wesentlich verbessert. Während des Verdichtens wird auch die Oberfläche der Holzpellets verformt und bevorzugt geglättet. Dies erhöht die Fließ-/ Rieselfähigkeit der beispielsweise in einem Silo vorgehaltenen und von dort einem Ofen zugeführten Pellets wesentlich.

Die Bildung von insbesondere stäbchenförmigen Pellets aus Vollholz oder Vollholzabschnitten wird wesentlich verbessert, da eine Aufbereitung des Vollholzes zu Holzspänen und eine anschließende Umformung der Holzspäne zu Pellets unterbleibt. Desweiteren kann die Bildung der Pellets zügig und in einem einzigen Arbeitsgang durchgeführt werden, was die Taktzeiten entsprechender Vorrichtungen zum Durchführen des Verfahrens wesentlich verringert und damit zu einer Effizienzsteigerung und Kostensenkung bei der Herstellung von Pellets aus Vollholz führt. Mindere Holzqualitäten können in dem Verfahren und mit der zuvor beschriebenen Vorrichtung an Ort und Stelle, d. h. direkt am Waldort oder im Sägewerk weiterverarbeitet werden. Die Uniformität der Pellets vereinfacht wesentlich den Transport. Durch die Verdichtung können größere Holzvolumina transportiert werden, wodurch der Transport optimiert und Kosten gesenkt werden.

Das Verfahren umfasst bevorzugt zusätzlich einen Verfahrensschritt, wobei die Vollholzabschnitte vor dem Aufspalten in Scheiben aufgeschnitten oder aufgetrennt werden. Diese Scheiben weisen dann bevorzugt eine Höhe auf, die im Wesentlichen der Länge des stäbchenförmigen Pellets entspricht. Das Aufschneiden oder Auftrennen des Vollholzes erfolgt dabei insbesondere mittels einer Bandsäge, Kreissäge, Wippsäge oder einem insbesondere hydraulisch beaufschlagten Scher- oder Spaltmesser. Die Auswahl des geeigneten Schneidewerkzeuges wird anhand der Ausführung der für die Durchführung des Verfahrens ausgewählten Vorrichtung, und/oder anhand des Durchmessers beziehungsweise der Stärke der aufzuschneidenden Vollholzabschnitte sowie der Holzart ausgewählt.

Als alternativer Verfahrensschritt kann anstelle eines dem Aufspalten und Verdichten vorgelagerten Aufschneidens vorgesehen werden, dass die aufgespalteten und verdichteten Vollholzabschnitte erst nach dem Durchführen des eigentlichen Verfahrens auf die Länge der letztendlichen Pellets gekürzt werden. Hierzu ist dann eine entsprechende Schneidevorrichtung der Matrize nachgeordnet vorgesehen und der Verfahrensschritt des Ablängens der Pellets wird nach dem Aufspalten und Verdichten durchgeführt.

Zur Durchführung des Verfahrens wird es als vorteilhaft angesehen, wenn die Vollholzabschnitte mittels einer Press- und/oder Vorschubrichtung in beziehungsweise durch die horizontal oder vertikal ausgerichtete Matrize gepresst werden.

Als vorteilhaft wird es im Zusammenhang mit dem erfindungsgemäßen Verfahren angesehen, wenn beim oder nach dem Aufspalten oder Verdichten des Vollholzes eine Modifikation einer Oberfläche und/oder einer Form der Pellets durchgeführt wird. Eine derartige Modifikation kann beispielsweise in Form eines Aufrauens oder Glättens der Oberfläche erfolgen. Während ersteres das Abbrandverhalten und die Wärmeabgabe der Pellets verbessert, modifiziert das Glätten der Oberfläche die Fließ- bzw. Rieselfähigkeit der Pellets. Neben oder zusätzlich zu Aufrauen oder Glätten kann die Modifikation auch in einer runden, vier- oder mehreckigen Formgebung der Pellets bestehen.

Neben der Formgebung und Glättung der Pellets kann beim oder nach dem Aufspalten oder dem Verdichten auch ein Beschichten oder Imprägnieren der Pellets durchgeführt werden. Eine derartige Beschichtung oder Imprägnierung kann beispielsweise in Form eines Wachses oder Lackes auf die Pellets aufgebracht werden, um deren Abbrand- oder Anzündverhalten zu verbessern.

In einer vorteilhaften Weiterbildung des Verfahrens ist vorgesehen, dass Stammholz oder Abschnitte davon vor der Verarbeitung entrindet werden. Hierdurch wird die

Form der Abschnitte vergleichmäßigt und der Durchgang durch die Matrize vereinfacht. Auch wird insgesamt reineres Pelletmaterial erzielt.

Die Erfindung umfasst gleichermaßen ein stäbchenförmiges Pellet aus in Längsrichtung der Holzfaser aufgespaltetem und parallel zur Längsrichtung der Holzfaser verdichtetem Vollholz. Das stäbchenförmige Pellet zeichnet sich insbesondere dadurch aus, dass eine Oberfläche des Pellets eine Modifikation durch Aufrauen, Glätten oder Beschichten aufweist. Als vorteilhaft wird angesehen, wenn das Pellet eine runde, vier- oder mehreckige Form aufweist.

In diesem Zusammenhang wird insbesondere darauf hingewiesen, dass alle im Bezug auf die Vorrichtung beschriebenen Merkmale und Eigenschaften, aber auch Verfahrensweisen sinngemäß auch bezüglich der Formulierung des erfindungsgemäßen Verfahrens übertragbar und im Sinne der Erfindung einsetzbar und als mitoffenbart gelten. Gleiches gilt auch in umgekehrter Richtung, das bedeutet, nur im Bezug auf das Verfahren genannte, bauliche, also vorrichtungsgemäße Merkmale können auch im Rahmen der Vorrichtungsansprüche berücksichtigt und beansprucht werden und zählen ebenfalls zur Erfindung und zur Offenbarung.

In den Zeichnungen ist die Erfindung insbesondere in einem Ausführungsbeispiel schematisch dargestellt. Es zeigen:
- Fig. 1: eine bevorzugte Ausführungsform der erfindungsgemäßen Matrize in der Draufsicht,
- Fig. 2: eine Schnittdarstellung der in Fig. 1 dargestellten Matrize, geschnitten entlang der Linie AA in Fig. 1
- Fig. 3: eine weitere Schnittdarstellung der in Fig. 1 dargestellten Matrize, geschnitten entlang der Linie BB in Fig. 1
- Fig. 4: eine vergrößerte Darstellung des in Fig. 3 mit C bezeichneten Bereichs der Matrize
- Fig. 5a, 5b: eine bevorzugte Ausführungsform des erfindungsgemäßen Pellets vor beziehungsweise nach dem Verdichten

- Fig. 6: eine schematische Darstellung einer bevorzugten Ausführungsform der erfindungsgemäßen Vorrichtung zum Bilden von Pellets in der Seitenansicht,
- Fig.7: eine weitere Ausführungsform der erfindungsgemäßen Vorrichtung in der Seitenansicht,
- Fig. 8a: eine bevorzugte Ausführungsform der erfindungsgemäßen Matrize in der Draufsicht,
- Fig 8b: eine in der Matrize gemäß Fig. 8a verwendbare Hülse in perspektivischer Darstellung,
- Fig. 9a: eine weitere bevorzugte Ausführungsform der erfindungsgemäßen Matrize in Draufsicht,
- Fig. 9b: eine in der Matrize gemäß Fig. 9a verwendbare Hülse in perspektivischer Darstellung,
- Fig. 9c: eine Detailansicht des Berührungsbereichs zwischen zwei Hülsen, in seitlicher Schnittdarstellung.

In den Figuren sind gleiche oder einander entsprechende Elemente jeweils mit den gleichen Bezugszeichen bezeichnet und werden daher, sofern nicht zweckmäßig, nicht erneut beschrieben.

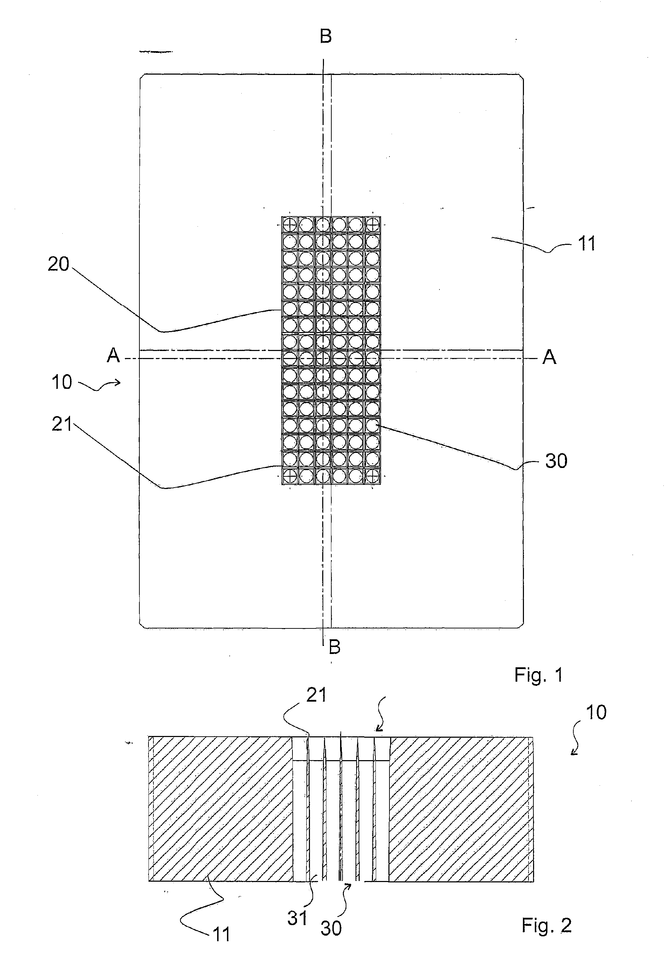

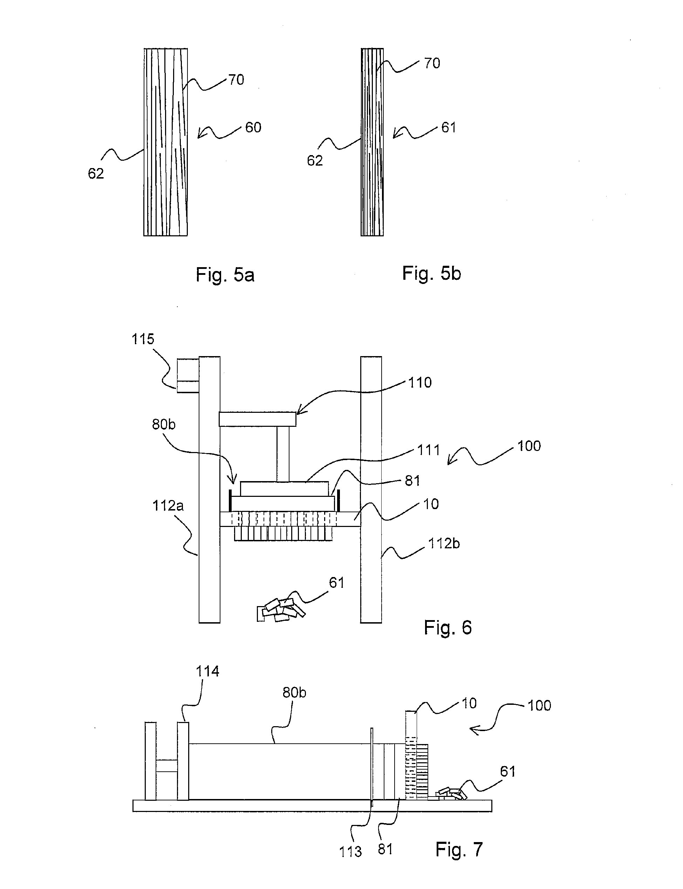

Fig. 1 zeigt eine erfindungsgemäße Matrize 10, zum Bilden von Pellets 61 aus Vollholz 80a oder Vollholzabschnitten 80b. In Fig. 1 dargestellt ist eine Draufsicht auf die erfindungsgemäße Matrize 10. Dadurch erkennbar ist die Schneidenanordnung 20, die zum Aufspalten von Vollholz 80a oder einem Vollholzabschnitt 80b insbesondere in Längsrichtung der Holzfasern 70 dient. Aus dem Vollholz 80a beziehungsweise dem Vollholzabschnitt 80b wird nach Verdichten ein stäbchenförmiges Pellet 61 hergestellt. Hierzu umfasst die Matrize 10 einen der Schneidenanordnung 20 nachgeordneten Verdichtungsbereich 30. Der Verdichtungsbereich 30 weist in der Ausführungsform der Fig. 1 einen kreisförmigen Querschnitt auf. Die in der Schneidenanordnung 20 vorgesehenen Schneiden 21 sind hier rasterartig angeordnet. Die Matrize 10 umfasst zusätzlich einen Rahmen 11, der als Aufnahme für die Schneidenanordnung 20 und den Verdichtungsbereich 30 dient. Der Verdichtungsbereich 30 ist dabei in den Rahmen 11 selbst eingeformt, das heißt, fest mit diesem verbunden, während die Schneiden 21 aus dem Rahmen 11 entnehmbar sind, um beispielsweise bei Verschleiß oder Holzartenwechsel ausgetauscht zu werden. Der Rahmen 11 besteht im Ausführungsbeispiel aus Stahl und weist eine Stärke auf, die der gesamten Matrize 10 ausreichende Standfestigkeit in wie beispielsweise in den Fig. 6 und 7 dargestellten Vorrichtungen 100 verleiht.

Die Stärke des Rahmens 11 wird aus Fig. 2 ersichtlich. Fig. 2 zeigt eine Schnittdarstellung der in der Fig. 1 gezeigten Matrize 10 entlang der dort eingezeichneten Linie AA. Geschnitten sind hierbei der Rahmen 11 sowie die Schneidenanordnung 20, die Schneiden 21 und der Verdichtungsbereich 30.

Aus der Fig. 2 ist erkennbar, dass sich der Verdichtungsbereich 30 direkt und unmittelbar an die Schneiden 21 anschließt, das heißt die Schneiden 21 nahtlos in den Verdichtungsbereich 30 übergehen. Der Verdichtungsbereich 30 weist gegenüber den Schneiden 21 eine stark verdickte Wand 31 auf. Dies ist notwendig, um die eingetragenen Kräfte aufnehmen zu können, um eine zufriedenstellende Verdichtung der Pellets 61 im Verdichtungsbereich 30 zu ermöglichen. Bei Verwendung der Matrize 10 wird ein Vollholz 80a oder Vollholzabschnitt 80b in die Matrize 10 eingepresst und hier durch die Schneiden 21 zunächst aufgespaltet. Direkt danach erfolgt ein Verdichten der so gebildeten Rohpellets 60 im Verdichtungsbereich 30. Das Aufspalten erfolgt in Längsrichtung der Holzfasern 70, während die Verdichtung parallel zur Längsrichtung der Holzfasern 70 beim Durchgang durch den Verdichtungsbereich 30 erfolgt. Nach dem Verdichten treten stäbchenförmige Pellets 61 aus der Matrize 10 aus und können beispielsweise in einem Silo gesammelt oder direkt abgesackt werden.

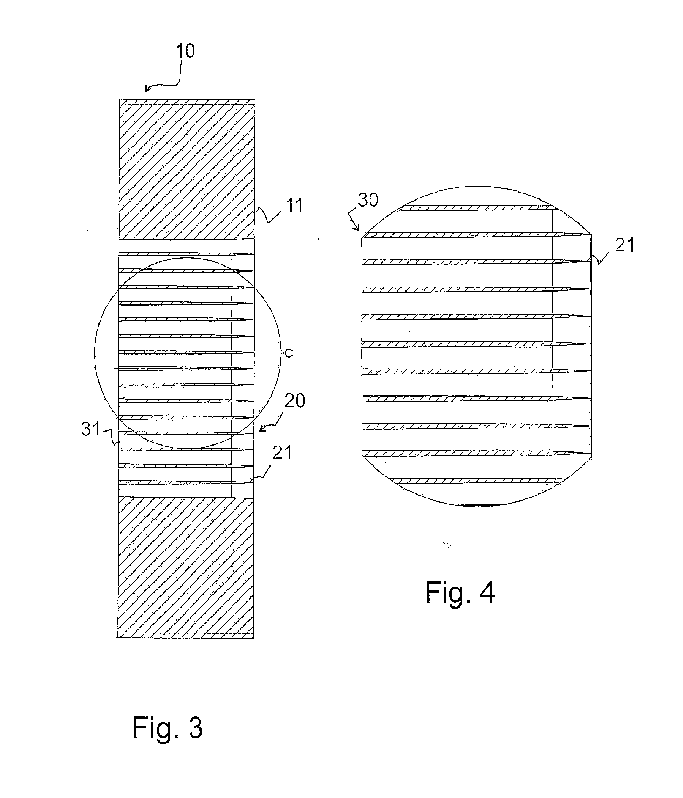

Die Fig. 3 zeigt eine weitere Schnittdarstellung der Matrize 10, ein Schnitt erfolgte hier entlang der in Fig. 1 eingezeichneten Linie BB. Auch hier wird die Anordnung der Schneiden 21 vor dem Verdichtungsbereich 30 erkennbar. Die Schneiden 21 sind im Ausführungsbeispiel der Fig. 3 entnehmbar ausgebildet. Somit können diese gegen neue Schneiden 21 ausgetauscht werden, sobald die Schneiden 21 verschlissen sind. Über den Winkel α der Schneiden 21 kann deren Spaltleistung eingestellt bzw. die Schneidenanordnung 20 auf bestimmte Holzarten abgestimmt werden, da diese nicht selten unterschiedliche Spalteigenschaften aufweisen, die sich aus der Länge und Ausrichtung der Fasern 70 im Vollholz 80a ergeben.

Für die Heizleistung des Holzes von Bedeutung ist neben dem Trocknungsgrad auch dessen Holzdichte. Diese kann in der in den Fig. 1 bis 3 dargestellten Matrizen 10 erhöht werden, wenn das zu Rohpellets 60 aufgespaltete Vollholz 80a durch den Verdichtungsbereich 30 hindurchgedrückt oder gepresst wird. Neben einer Verdichtung und damit einer Erhöhung der Holzdichte und somit des letztendlichen Heizwertes der Pellets 61 erfolgt im Verdichtungsbereich 30 auch eine Formgebung der Pellets 61. Die Oberfläche 62 der Pellets 61 (vgl. Fig. 5a, 5b) wird hierdurch geglättet. Dadurch erhöht sich die Rieselfähigkeit der fertigen Pellets 61, was sich beispielsweise bei der Lagerung und der Beförderung zu einem Ofen als vorteilhaft erweist.

In Fig. 4 wird der in Fig. 3 mit C markierte Bereich der Matrize 10 vergrößert dargestellt. Der Verdichtungsbereich 30 ist hier noch besser erkennbar. In Fig. 4 erkennbar ist ebenfalls die Geometrie der Schneiden 21. Der Schneidenwinkel kann hierbei variiert werden. Auch die Länge der Schneiden 21 ist variabel. Durch entsprechenden Austausch der Schneiden 21 kann somit eine individualisierte Matrize 10 zur Verfügung gestellt werden. Aus Fig. 4 wird ebenfalls erkennbar, dass das Aufspalten des Vollholzes 80a ohne wesentliche Abfälle erfolgt, da durch die Schneiden 21 die Gesamtfläche des in die Matrize 10 eingepressten Vollholzabschnittes 80b aufgespaltet wird. Es ergeben sich hierbei keine verbleibenden Zwischenstege oder dergleichen, wie dies beispielsweise bei der Verwendung von Stanzen der Fall ist.

Die erfindungsgemäße Matrize 10 erlaubt somit Vollholz 80a vollständig für eine thermische Verwendung zu verwenden und ermöglicht in einfacher und schneller Art und Weise die Bildung von Holzpellets 61 aus dem Vollholz 80a. Die erfindungsgemäße Matrize 10 wie in den Fig. 1 bis 4 dargestellt vermeidet somit die Aufarbeitung des Vollholzes 80a zu Fasern oder Spänen, um diese hernach einem Press- oder Extrusionsvorgang zu unterziehen. Das anfallende Vollholz 80a kann sofort und in einem einzigen Arbeitsgang zu Pellets 61 verarbeitet werden, die für die thermische Verwertung zur Verfügung stehen.

Die mit der erfindungsgemäßen Matrize 10 und in dem erfindungsgemäß vorgeschlagenen Verfahren bildbaren Pellets 61 sind in den Fig. 5a und 5b dargestellt. Fig. 5a zeigt ein Rohpellet 60 vor dem Verdichten. Erkennbar sind die Holzfasern 70. Ein derartiges Rohpellet 60 wird durch die Schneidenanordnung 21 in der Matrize 10 (vgl. Fig. 1-4) in dem ersten Verfahrensschritt des Aufspaltens aus Vollholz 80a gebildet. Nach dem Aufspalten erfolgt im gleichen Arbeitsgang und im selben Werkzeug ein Verdichten der Rohpellets 60 bis zu einem bestimmten, durch die Weite des Verdichtungsbereichs 30 eingestellten Verdichtungsgrad. Hierbei bleibt die Faserstruktur des Holzes erhalten, lediglich der Abstand der Fasern 70 zueinander wird verringert. Hierbei wird die Holzdichte insgesamt erhöht, woraus sich, bezogen auf das Volumen der fertigen Pellets 61 ein erhöhter Heizwert ergibt. Zudem weist das verdichtete Pellet 61, wie in Fig. 5b dargestellt, eine zusätzlich modifizierte Oberfläche 62 auf. Diese ist aufgrund des Verdichtungsvorganges und der Ausgestaltung des Verdichtungsbereichs 30 besonders glatt. Es erhöht sich so die Riesel- beziehungsweise Fließfähigkeit der Pellets 61, was beispielsweise bei Lagerung in einem Silo und Zuführung über eine Zuführvorrichtung Vorteile bringt. Herkömmliche, aus Spänen oder Holzabfällen gebildete Pellets 61 weisen eine raue Oberfläche 62 auf und neigen in Silos oder Lagerbunkern zur Verklumpung und Brückenbildung. Dies stört die Nachführung von Brennstoff und kann zu einer signifikanten Beeinträchtigung von Brennern führen. Zudem neigen derartige Pellets 61 zu starker Staubbildung. Diese tritt bei den erfindungsgemäßen Pellets 61 nicht auf.

Fig. 6 zeigt eine bevorzugte Ausführungsform der erfindungsgemäßen Vorrichtung 100 zur Bildung von stäbchenförmigen Pellets 61. In der Vorrichtung 100 angeordnet befindet sich eine Matrize 10. Zusätzlich weist die Vorrichtung 100 eine Pressvorrichtung 110 auf. In die Vorrichtung 100 eingelegt werden Vollholzabschnitte 80b, die bereits zu Scheiben 81 aufgeschnitten sind und deren Höhe im Wesentlichen der Länge des letztendlich gebildeten stäbchenförmigen Pellets 61 entspricht. Die Scheibe 81 wird auf die Matrize 10 aufgelegt und hernach der Stempel 111 der Pressvorrichtung 110 auf die Scheibe 81 aufgelegt. Die den Pressstempel 110 betätigende Hydraulik ist in einer seitlich angeordneten Säule 112a untergebracht. Erkennbar ist in Fig. 6 lediglich der Antrieb 115 für die Hydraulik.

Über diese wird der Stempel 111 beaufschlagt und presst die Scheibe 81 in die Matrize 10 ein. Die Matrize 10 weist der Scheibe 81 zugewandt zunächst eine Schneidenanordnung 21 auf (vgl. Fig. 3). Hierdurch wird ein Aufspalten des Scheibe 81 durchgeführt. Durch weitere Druckbeaufschlagung mittels des Stempels 111 wird das aufgespaltete Holz weiter in die Matrize 10 eingepresst und durch den Verdichtungsbereich 30 (vgl. Fig. 3) hindurchgedrückt. Hierbei erfolgt dann eine Verdichtung der aufgespalteten Rohpellets 60 und deren abschließende Formgebung. Die gebildeten Pellets 61 fallen aus der Matrize 10 heraus beziehungsweise werden durch den nächsten, wiederum auf die Matrize 10 aufgelegten Vollholzabschnitt 80b bei dessen Durchpressen durch die Matrize 10 aus dieser herausgedrückt. Die Pellets 61 stehen dann zur Lagerung oder Absackung zur Verfügung. Um die auftretenden Drücke aufnehmen zu können, ist die Matrize 10 in einer weiteren Säule 112b, die der ersten Säule 112a gegenüber angeordnet ist, gelagert. Neben der hier in Fig. 6 dargestellten Anordnung der Matrize 10 mit vertikaler Ausrichtung besteht selbstverständlich auch die Möglichkeit, die gesamte Vorrichtung 100 horizontal anzuordnen, was bewirkt, dass die Matrize 10 vertikal zur Pressvorrichtung 110 ausgerichtet ist. In Fig. 6 nicht dargestellt ist eine Schneidevorrichtung 113 (vgl. Fig. 7) zum Aufschneiden eines Vollholzabschnittes 80b beziehungsweise einer Rolle oder dergleichen. Ebenfalls nicht dargestellt ist die Entrindungsvorrichtung für das Vollholz 80a. In einer Ausführungsform des erfindungsgemäßen Verfahrens ist vorgesehen, dass zunächst ein Entrinden des Stammholzes erfolgt, bevor dies zu entsprechenden Vollholzabschnitten 80b abgelängt und der erfindungsgemäßen Vorrichtung 100 zugeführt wird.

Eine weitere Ausführungsform der erfindungsgemäßen Vorrichtung zeigt die Fig. 7. Hierbei ist die Matrize 10 vertikal angeordnet. Der Vollholzabschnitt 80b ist hier in Form einer Rolle oder Walze ausgebildet. Die in der Fig. 7 dargestellte Vorrichtung 100 verfügt zusätzlich über eine Schneidevorrichtung 113, die der Matrize 10 vorgelagert angeordnet ist. Durch diese Schneidevorrichtung 113 wird der Vollholzabschnitt 80b in Scheiben 81 aufgeschnitten. Die Vorrichtung 100 verfügt zusätzlich über eine kombinierte Press- und Vorschubvorrichtung 114, die dazu dient, den horizontal in die Vorrichtung 100 eingelegten Vollholzabschnitt 80b zum Einen der Schneidevorrichtung 113 zuzuführen und die zum Anderen dafür vorgesehen ist, die abgetrennten Scheiben 81 in die Matrize 10 einzupressen, um hieraus dann letztendlich die fertigen Pellets 61 zu bilden. Die Matrize 10 weist die wie zuvor beschriebene Ausführung auf und verfügt über eine Schneidenanordnung 21 und einen dieser Schneidenanordnung 21 nachgeordneten Verdichtungsbereich 30.

Die in den Fig. 6 und 7 stark schematisiert dargestellte Vorrichtung 100 ist bevorzugt mobil ausgeführt und beispielsweise auf einem Anhänger oder einem Transportfahrzeug angeordnet. Der Antrieb 115 der Vorrichtung 100 kann dann über einen gesonderten Antrieb 115 erfolgen. Daneben ist eine Koppelung an den Fahrzeugantrieb oder die -hydraulik möglich. Mindere Holzqualitäten können so an Ort und Stelle, d. h. direkt am Waldort/Ort der Holzwerbung oder im Sägewerk weiterverarbeitet werden. Weitergehende Transporte der minderwertigen Qualitäten entfallen somit. Die Uniformität der Pellets 61 vereinfacht zudem wesentlich deren Transport. Durch die Verdichtung können größere Holzvolumina transportiert werden, wodurch der Transport optimiert und Kosten gesenkt werden.

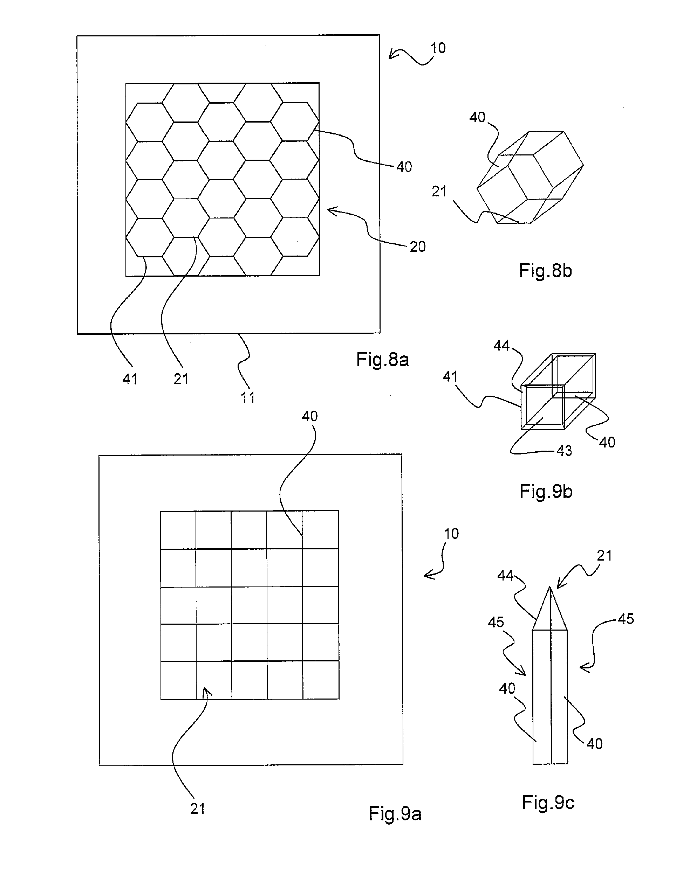

Die Fig. 8a zeigt eine bevorzugte Ausführungsform der erfindungsgemäßen Matrize 10. Diese verfügt über einen Rahmen 11 in dem die Schneidenanordnung 21 lösbar angeordnet ist. Die Schneidenanordnung 20 wird im Ausführungsbeispiel der Fig. 8a aus Hülsen 40 gebildet, die im Ausführungsbeispiel sechseckig ausgebildet sind. Die Schneidenanordnung 21 ist aus einer Vielzahl derartiger Hülsen 40 zusammengesetzt. Die Hülsen 40 können einzeln aus der Schneidenanordnung 21 entnommen und beispielsweise bei Verschleiß gegen neue Hülsen 40 ausgetauscht werden. Auch bietet die hier dargestellte Ausführungsform der Schneidenanordnung 21 die Möglichkeit, auf unterschiedliche Holzdurchmesser beziehungsweise Holzarten zu reagieren.

Die Hülsen 40 weisen an ihrem dem Betrachter zugewandten Umfang 41 Schneiden 21 auf, die das Vollholz 80a beziehungsweise den Vollholzabschnitt 80b aufzuspalten. Über die Geometrie der Hülsen 40 wird bereits eine Form des Rohpellets 60 definiert. Die den Hülsen 40 nachgeordneten beziehungsweise in die Hülsen 40 integrierten Verdichtungsbereiche 30 bewirken dann eine entsprechend formhaltige Verdichtung der Rohpellets 60. Die mit der Matrize 10 wie in Fig. 8a gebildeten Pellets 61 weisen somit eine insgesamt sechseckige Form auf.

Fig. 8b zeigt eine einzelne Hülse 40 in perspektivischer Darstellung. Erkennbar sind hier die am Umfang der Hülse angeordneten Schneiden 21.

Fig. 9a zeigt eine weitere bevorzugte Ausführungsform der erfindungsgemäßen Matrize 10. Diese weist eine Schneidenanordnung 21 auf, die aus Hülsen 40 mit quadratischem Querschnitt zusammengesetzt ist.

Eine derartige Hülse 40 ist in Fig. 9b vergrößert dargestellt. Aus Fig. 9b erkennbar ist, dass die Hülse 40 an ihrem Umfang 41 eine zum Hülseninneren 43 abfallende winklige Schneidenfläche 44 aufweist. Diese Schneidenfläche 44 ergänzt sich mit der gleichermaßen ausgebildeten Schneidenfläche 44 einer benachbart angeordneten Hülse 40 zu einer Schneide 21 (vgl. Fig. 9c) zum Aufspalten des Vollholzabschnittes 80b. Es sei angemerkt, dass auch die in Fig. 8b dargestellte Hülse 40 eine derartige Schneidenfläche 44 aufweisen kann.

Eine Anordnung von zwei Hülsen 40 ist schematisch in der Fig. 9c dargestellt. Hier werden die beiden aneinander liegenden Außenflächen 45 von zwei Hülsen 40 dargestellt. Ebenfalls erkennbar ist hier die sich somit ergebende Schneide 21 mit winkligen Schneidenflächen 44, die dann nach Art eines Spaltkeiles oder dergleichen winklig ausgebildet ist und ein effektives Aufspalten der Vollholzabschnitte 80b ermöglicht. Auch die in der Fig. 9a dargestellte Matrize 10 erlaubt aufgrund der Austauschbarkeit der einzelnen Hülsen 40 eine individuelle Anpassung der Matrize 10 an die Gegebenheiten beziehungsweise das Verfahren zur Herstellung von stäbchenförmigen Pellets 61.

### Bezugszeichenliste

- 10: = Matrize
- 11: = Rahmen
- 20: = Schneidenanordnung
- 21: = Schneide
- 30: = Verdichtungsbereich
- 31: = Wand
- 60: = Rohpellet
- 61: = Pellet
- 62: = Oberfläche
- 70: = Holzfaser
- 80a: = Vollholz
- 80b: = Vollholzabschnitt

- 81: = Scheibe
- 100: = Vorrichtung
- 110: = Pressvorrichtung
- 111: = Stempel
- 112 a, b: = Säule
- 113: = Schneidevorrichtung
- 114: = Press- und Vorschubvorrichtung
- 40: = Hülse
- 41: = Umfang
- 43: = Hülseninneres
- 44: = Schneidenfläche
- 45: = Außenfläche

## Patentansprüche

1. Matrize (10) zur Bildung von Pellets (61) aus Vollholz (80a), insbesondere aus Vollholzabschnitten (80b), mit wenigstens einer Schneidenanordnung (20) und einem der Schneidenanordnung (20) nachgeordneten Verdichtungsbereich (30), wobei ein Aufspalten und ein Verdichten des Vollholzes (80a) in einem Arbeitsgang durchführbar ist,
**dadurch gekennzeichnet, dass**
die Schneidenanordnung (20) lösbar in der Matrize (10) angeordnet und der Verdichtungsbereich (30) in die Matrize (10) eingeformt ist.

2. Matrize (10) nach Anspruch 1,
**dadurch gekennzeichnet, dass**
das Aufspalten in Längsrichtung der Holzfasern (70) und das Verdichten parallel zur Längsrichtung der Holzfasern (70) durchführbar ist.

3. Matrize (10) nach Anspruch 1 oder 2,
**dadurch gekennzeichnet, dass**
die Schneidenanordnung (20) und der Verdichtungsbereich (30) in einem Rahmen (11) angeordnet sind und/oder der Verdichtungsbereich (30) konisch zulaufend und/oder mit rundem, vier- oder mehreckigem Querschnitt ausgebildet ist.

4. Matrize (10) nach einem der vorhergehenden Ansprüche,
**dadurch gekennzeichnet, dass**
die Schneidenanordnung (20) in den Verdichtungsbereich (30) übergeht und/oder dadurch, dass die Schneidenanordnung (20) lösbar in dem Rahmen (11) angeordnet und der Verdichtungsbereich (30) in den Rahmen (11) eingeformt ist.

5. Matrize (10) nach einem der vorhergehenden Ansprüche,
**dadurch gekennzeichnet, dass**
die Schneidenanordnung (20) wenigstens zwei Schneiden (21) oder Schneidplatten aufweist und die Schneiden (21) oder Schneidplatten rasterartig angeordnet sind und/oder die Schneiden (21) oder Schneidplatten lösbar oder fest in der Matrize (10) und/oder dem Rahmen (11) anordenbar sind und/oder in der Schneidenanordnung (20) wenigstens zwei Hülsen (40) insbesondere mit einem runden, vier- oder mehreckigen Querschnitt vorgesehen sind und jeweils eine Schneide (21) oder Schneidenfläche (44) am Umfang (41) der Hülsen (40) angeordnet ist und/oder aus den Schneidenflächen (44) benachbarter Hülsen (40) eine Schneide (21) bildbar ist und/oder die Hülsen (40) lösbar oder fest in der Matrize (10) und/oder dem Rahmen (11) anordenbar sind, insbesondere wobei die Hülsen (40) raster- oder wabenartig angeordnet sind und/oder die Schneidenanordnung (20), die Schneiden (21), der Verdichtungsbereich (30) und/oder der Rahmen (11) eine haftungsreduzierende Oberflächenbeschichtung, insbesondere eine Beschichtung mit einem Hartstoff, bevorzugt mit Titancarbid oder Titannitrid aufweisen oder die Schneidenanordnung (20), die Schneiden (21), der Verdichtungsbereich (30) und/oder der Rahmen (11) aus Stahl, Hartmetall, Cermet, Keramik oder dergleichen gebildet ist/sind.

6. Matrize (10) nach einem der vorhergehenden Ansprüche,
**dadurch gekennzeichnet, dass**
die Schneidenanordnung (20), die Schneiden (21) und/oder der Verdichtungsbereich (30) verstellbar, insbesondere jeweils variabel beabstandbar ausgebildet ist/sind.

7. Vorrichtung (100) zur Herstellung von Pellets (61) aus Vollholz (80a) oder Vollholzabschnitten (80b) mit einer Matrize (10) gemäß einem der Ansprüche 1 bis 6.

8. Vorrichtung (100) nach Anspruch 7,
**dadurch gekennzeichnet, dass**
die Matrize (10) horizontal oder vertikal in der Vorrichtung (100) angeordnet ist und/oder wenigstens eine im wesentlichen parallel zur Matrize (10) angeordnete Schneidevorrichtung (113) für das Vollholz (80a), die Vollholzabschnitte (80b) und/oder die Pellets (61) vorgesehen ist, insbesondere wobei die Schneidevorrichtung (113) der Matrize (10) vor- oder nachgelagert angeordnet ist und die Schneidevorrichtung (113) bevorzugt als Bandsäge, Kreissäge, Wippsäge oder als senkrecht zu der Bearbeitungsrichtung ausgerichtetes, insbesondere hydraulisch beaufschlagtes Scher- oder Spaltmesser oder dergleichen ausgebildet ist.

9. Vorrichtung (100) nach einem der Ansprüche 7 oder 8,
**dadurch gekennzeichnet, dass**
eine insbesondere hydraulische oder pneumatische Press- und/oder Vorschubvorrichtung (114) für das Vollholz (80a), die Vollholzabschnitte (80b) und/oder die Matrize (10) und/oder eine Führung für das Vollholz (80a) oder die Vollholzabschnitte (80b) zur Führung auf die Matrize (10) zu vorgesehen ist.

10. Verfahren zur Herstellung von stäbchenförmigen Pellets (61) aus Vollholz (80a) oder Vollholzabschnitten (80b) mittels einer Matrize (10) gemäß einem der Ansprüche 1 bis 6 oder mittels einer Vorrichtung gemäß einem der Ansprüche 7 bis 9,
umfassend die Schritte:
- Aufspalten des Vollholzes (80a) oder der Vollholzabschnitte (80b) und
- nachfolgendes Verdichten des aufgespalteten Vollholzes (80a) oder
Vollholzabschnittes (80b),
wobei das Aufspalten und Verdichten in der Matrize (10) in einem Arbeitsgang durchgeführt wird.

11. Verfahren nach Anspruch 10,
**dadurch gekennzeichnet, dass**
das Aufspalten in Längsrichtung der Holzfasern (70) und das Verdichten parallel zur Längsrichtung der Holzfasern (70) erfolgt und/oder das Vollholz (80a) oder die Vollholzabschnitte (80b) vor dem Aufspalten insbesondere mittels einer Bandsäge, Kreissäge, Wippsäge, einem insbesondere hydraulisch beaufschlagten Scher- oder Spaltmesser oder dergleichen in Scheiben (81) aufgeschnitten werden, wobei die Scheiben (81) bevorzugt eine Höhe aufweisen, die im Wesentlichen der Länge des stäbchenförmigen Pellets (61) entspricht insbesondere wobei das aufgespaltete Vollholz (80a) oder die Vollholzabschnitte (80b) nach dem Verdichten insbesondere mittels einer Bandsäge, Kreissäge, Wippsäge, einem insbesondere hydraulisch beaufschlagten Scher- oder Spaltmesser oder dergleichen zu Pellet (61) gekürzt werden.

12. Verfahren nach einem der Ansprüche 10 oder 11,
**dadurch gekennzeichnet, dass das**
Vollholz (80a) oder die Vollholzabschnitte (80b) mittels einer Press- und/oder Vorschubvorrichtung (114) in bzw. durch die Matrize (10) gepresst werden, wobei die Matrize (10) horizontal oder vertikal ausgerichtet ist.

13. Verfahren nach einem der Ansprüche 10 bis 12,
**dadurch gekennzeichnet, dass**
beim oder nach dem Aufspalten und/oder Verdichten eine Modifikation einer Oberfläche (62) und/oder einer Form der Pellets (61), insbesondere ein Aufrauen, Glätten, eine runde, vier- oder mehreckige Formgebung und/oder ein Beschichten/Imprägnieren durchgeführt wird und/oder vor dem Aufspalten eine Entrindung des Vollholzes (80a) oder der Vollholzabschnitte (80b) vorgesehen ist.

14. Stäbchenförmiges Pellet (61) aus in Längsrichtung der Holzfasern (70) aufgespaltetem und parallel zur Längsrichtung der Holzfasern (70) verdichtetem Vollholz (80a) oder Vollholzabschnitten (80b).

15. Stäbchenförmiges Pellet (61) nach Anspruch 14,
**dadurch gekennzeichnet, dass**
eine Oberfläche (62) des Pellets (61) eine Modifikation durch Aufrauen, Glätten oder eine Beschichtung/Imprägnierung aufweist und/oder das Pellet (61) eine runde, vier- oder mehreckige Form aufweist.
